# EUROPEAN PATENT SPECIFICATION

(11) **EP 0 672 243 B1**
(45) Date of publication and mention of the grant of the patent: **29.03.2000**
(21) Application number: 94901962.4
(22) Date of filing: 07.12.1993
(51) Int. Cl.: G01N 15/00, G01N 3/56

(54) **PROCEDURE AND DEVICE FOR ANALYZING OF PARTICLES IN A MEDIUM AND FOR CONTINUOUS DETERMINING OF WEAR CONDITION OF MECHANICAL CONTACTS IN CONTACT WITH THE MEDIUM**
VORRICHTUNG UND VERFAHREN ZUR PARTIKELANALYZE IN EINEM MEDIUM UND ZUR KONTINUIERLICHEN BESTIMMUNG DES ABNUTZUNGSGRADES VON MIT DIESEM MEDIUM IN KONTAKT STEHENDEN MECHANISCHEN KONTAKTEN
PROCEDE ET DISPOSITIF D'ANALYSE DE PARTICULES DANS UN MILIEU ET DE DETERMINATION EN CONTINU DE L'ETAT D'USURE DE PIECES DE CONTACT MECANIQUE SE TROUVANT EN CONTACT AVEC LE MILIEU

(30) Priority: 07.12.1992 FI 925556
(43) Date of publication of application: 20.09.1995
(73) Proprietor: VALTION TEKNILLINEN TUTKIMUSKESKUS, 02150 Espoo 15 (FI)
(72) Inventor: ENWALD, Petri, VTT Konepajan tuotantotekniikan, FIN-02150 Espoo (FI)
(74) Representative: Petri, Stellan
(86) International application number: FI9300526
(87) International publication number: WO9414049

(56) References cited:
- DD-A- 298 684
- GB-A- 2 264 556
- US-A- 4 219 805
- US-A- 4 831 641
- US-A- 4 918 739
- DERWENT'S ABSTRACT, No. 92-306943/37, week 9237; & SU,A,1686341 (VILN ENG CONSTR INST), 23 October 1991 (23.10.91).

## Description

The present invention concerns a procedure as defined in the preamble to Claim 1. The invention further concerns apparatus as defined in the preamble to Claim 18.

The significance, and occurrence, of wear particles and other impurities in lubricating and hydraulic systems has received increasing attention in recent years /Dowson D. Wear Particles: From the Cradle to the Grave, Proc. of the 18th Leeds-Lyon Symposium on Tribology, Elsevier 1992/. In order to increase the service life of apparatus and to improve the reliability of systems, apparatus and procedures have been developed by which one could better recognize the prevailing conditions with regard to oil as well as components and which would enable action to be taken with regard to deviations efficiently and at an early enough stage /Radzikowski P., On-line monitoring of Contamination Level in Hydraulic Oils p. 199-221, Operational Reliability ans Systematic Maintenance, Elsevier 1991./.

Non-continuous procedures based on particle counting are known in prior art in which the size distribution of the particles is determined, the cleanliness level of the oil being determined on the basis thereof. Also procedures based on filtration of samples are known, in which the quantity and type of particulate impurities are assayed. Furthermore, spectrometric procedures are known by which elements and compounds present in the sample can be identified.

The problem embarrassing said procedures of prior art is that they are only applicable in non-continuous analyzing in laboratory conditions.

However, in the course of development of condition monitoring procedures towards automation the need has arisen to work out continuously operating wear particle analysing methods and apparatus appropriate to be connected to the object which is being monitored.

A typical continuous procedure is for instance known through the publication: "Proceedings, Condition Monitoring -91; "On-line monitoring of ferromagnetic debris concentration", p. 324". The procedure is based on collecting the particles with a magnet onto a sensor, and on inductive determination of the particle concentration. The limitation of this procedure, as well as of most other on-line, on-site or in-line methods of simple design is that none but ferromagnetic particles can be assessed. This implies that no information is gained concerning other, non-magnetic materials. The parameters observed with the sensors are usually the particle concentration and/or count and/or size distribution. These indicators reflect the degree of purity and any aggravation of wear conditions (changes of size distribution). However, these procedures have significant deficiencies as regards minimum particle size and/or maximum concentration of particles and/or air bubbles and/or free water.

A significant drawback of existing on-line, on-site or in-line procedures is that only one or two parameters are monitored, which is significantly conducive to increased possibility of erroneous diagnosis. This is in practice due to the fact that wear particles and other impurities may accumulate at certain points in a hydraulic and lubricating system, whence they may be unexpectedly entrained with the flow, for instance as a consequence of some change in an operating parameter of the machine. A need has therefore arisen to develop procedures and apparatus by which one could also gain information on particle morphology, in order that potential changes of wear conditions could be verified on the basis of the particles' appearance prior to undertaking inspection or repair action, which is often very costly.

The object of the invention is to eliminate the drawbacks mentioned.

Specifically, the object of the invention is to disclose an automatic procedure and apparatus based on examining the features of wear particles by means of which the wear information which the particles carry could be analysed in numerical form during running.

It is further an object of the invention to disclose a procedure and apparatus by which the significant deficencies of existing, previously known procedures hampering their commercial exploitability can be eliminated.

The procedure of the invention is characterized by that which is stated in Claim 1. The apparatus of the invention is characterized by that which is stated in Claim 18.

As taught by the invention, the fluid is conveyed to an observation point, the fluid is rendered stationary at the observation point, a still image is made of the fluid, the image in analog form is digitized, methods of digital image processing are applied to determine automatically from the image certain index values which are central in regard of degree of purity and/or wear situation, these values reflecting the size, size distribution, shape, surface structure, light transmittance and colour of the particles present in the fluid, and the information thus obtained is classified with the aid of the index values found and of a predetermined set of deduction rules, such as an expert system, and the wear situation of sliding and/or rolling mechanical contacts in contact with the fluid is determined.

A specific application of the invention is condition monitoring of a lubricating system or hydraulic system.

The invention affords the advantage that by stopping the fluid flow the particles in the flow can be recorded for analysis. Hereby, in additon to ferromagnetic particles also other particle types can be included in the observation which are informationally significant, such as aluminium, copper, oxide, soot, polymer, molybdenum sulphide, silica (dust, sand) etc. particles, and fibres.

It is a further advantage of the invention that the wear situation can be followed in real time adjacent to the object that is being monitored.

Furthermore, owing to the invention, the procedure can be substituted for present cumbersome laboratory analyses, and more accurate and more versatile information than before can be gained concerning the wear and the cleanliness level of the system.

In addition, it is an advantage of the invention that monitoring a plurality of parameters and the changes occurring in them enables the cleanliness class of the fluid to be determined. Furthermore, it enables the wear situation of sliding and/or rolling contacts in contact with the fluid to be determined. The procedure also yields information on particle morphology, so that any change in wear situations that may occur can be verified on the basis of the particles' appearance before undertaking inspection or repair action involving high expenditures. The procedure can be applied to monitor all or any types of wear mechanism including abrasive, cutting, adhesive, fatigue and tribochemical wear mechanisms. The wear mechanisms prevailing in the system can be identified by specific features in the external shape and appearance of the particle, indicating a certain wear mechanism, such features being converted by means belonging to image processing and shape identification into mathematical form for classification.

With the aid of the procedure, it is possible to get in time a suggestion to undertake preventive repair action before any expensive damage is incurred. The expert system may also be arranged to actuate an alarm and to make suggestions for repair action. The larger the entity into which the machine under monitoring has been integrated, the greater the importance of its operation being predictable.

In an embodiment of the procedure, the still image is produced by physically stopping the fluid flow at the point of observation. Alternatively, the still image is made by illuminating the moving fluid flow with a flash light source, such as a stroboscopic lamp.

In an embodiment of the procedure, the still image is produced by using an exceedingly short time of exposure, such as an exposure on the order of 1/100,000 second.

In an embodiment of the procedure, the fluid is made to assume the shape of a thin film at the point of observation in order to enable light transmittance.

In an embodiment of the procedure, the image in digital form is segmented into a monochromatic image and a coloured image, which are further processed by methods of digital image processing.

In an embodiment of the procedure, immediately after stopping the fluid flow and before the particles settle on the surface of the lower window, an image is produced of the central part of the fluid made into a thin film, where the particles have random orientations, for particle counting.

In an embodiment of the procedure, the image is made of the particles present in the fluid, such as metallic and/or non-metallic particles, using illumination from below.

In an embodiment of the procedure, after the particles have settled on the lower window, an image is made of the fluid with its particles on the surface of the window, for wear situation analysis.

In an embodiment of the procedure, a plurality of images is made using various magnifications.

In an embodiment of the procedure, In the imaging is used continuous illumination and/or illumination of photoflash type.

In an embodiment of the procedure, in the imaging illumination from above and/or from below is used.

In an embodiment of the procedure, in the imaging white light, polarised white light and/or combinations of coloured light obtained with filters, such as red light from above and green light from below, are used.

In an embodiment of the procedure, prior to determining sizes, shapes and surface structures, from the image are eliminated, by digital image processing methods, any particles which are outside the depth of focus field of the image-forming optics.

In an embodiment of the procedure, images are made in statistically significant number with a view to collecting a time series material which is adequate for achieving cleanliness classification determination comparable with international standards.

In an embodiment of the procedure, a so-called fuzzy classifier is employed in the set of deduction rules.

In an embodiment of the procedure, as an intermediate result and before the final wear situation diagnosis, are reported the classification results from the fuzzy classifier and the development of the interdistribution of wear mechanisms, as a function of time.

In an embodiment of the procedure, as an intermediate result and before the final wear situation diagnosis, is reported as a function of time, the development of individual particle features computed by the image processing software.

As taught by the invention, the apparatus comprises a body, comprising a measuring passage passing theretrough, for conducting the fluid flow to and away from the imaging point; an aperture extending at the imaging point through said body transversally to the measuring path; and two imaging windows, supported by the body in register with said aperture, the gap between said windows being in flow communication with the measuring passage. The apparatus further compises valves for stopping the fluid to be stationary in the measuring passage, a photoelectric detector and optical means supported by the body, for producing through the imaging windows, images of the fluid and of the particles therein; a light source for illuminating the object which is being imaged; and a data processing device. The data processing device comprises programme means for digitizing the analog-form image into a digital image, for automatically determining by methods of digital image processing from the image the index Values which are central in view of the cleanliness level of the fluid and/or the wear situation in the system, said characteristic values reflecting the size, size distribution, shape, surface structure, light transmittance and colour of the particles present in the fluid. The data processing device further comprises a set of deduction rules, such as an expert system, for classifying the information that has been obtained with the aid of the index values determined and for determining the wear situation of sliding and/or rolling mechanical contacts in contact with the fluid.

In an embodiment of the apparatus, the apparatus comprises valves, such as magnetic valves, for stopping the fluid flow in the measuring passage for making a still image.

In an embodiment of the apparatus, the light source is a flash light source, such as a stroboscopic lamp, for making a still image.

In an embodiment of the apparatus, the imaging windows have been disposed horizontally, with substantially small spacing, for rendering the fluid into a thin film at the imaging point.

In an embodiment of the apparatus, the software means are disposed to segment the image in digital form into a monochromatic image and a coloured image.

In an embodiment of the apparatus, the apparatus comprises a light source beneath for producing illumination from below.

In an embodiment of the apparatus, the apparatus comprises a light source above for producing illumination from above.

In an embodiment of the apparatus, the apparatus comprises filters for polarizing the light from the light source and/or filtering it into different colours or combinations thereof.

In an embodiment of the apparatus, the photo-electric detector is a row-configurated, location-sensitive detector, such as a line camera.

In an embodiment of the apparatus, the photo-electric detector is a matrix-configurated, location-sensitive detector, such as a CCD camera.

In an embodiment of the apparatus, the apparatus comprises a light conductor composed of optical fibres for carrying the light from the light source to the point of observation.

In the following the invention is described in detail, referring to the attached drawing, wherein:
Fig. 1 presents schematically an embodiment of the apparatus of the invention for implementing the procedure of the invention,
Fig. 2 presents the body of an embodiment of the apparatus of the invention,
Fig. 3 presents the body of Fig. 2, as viewed in the direction III-III,
Fig. 4 presents in partial longitudinal section, the imaging point of the body of Figs 2 and 3, and
Fig. 5 presents the schematic principle diagram of an embodiment of the procedure and apparatus of the invention.

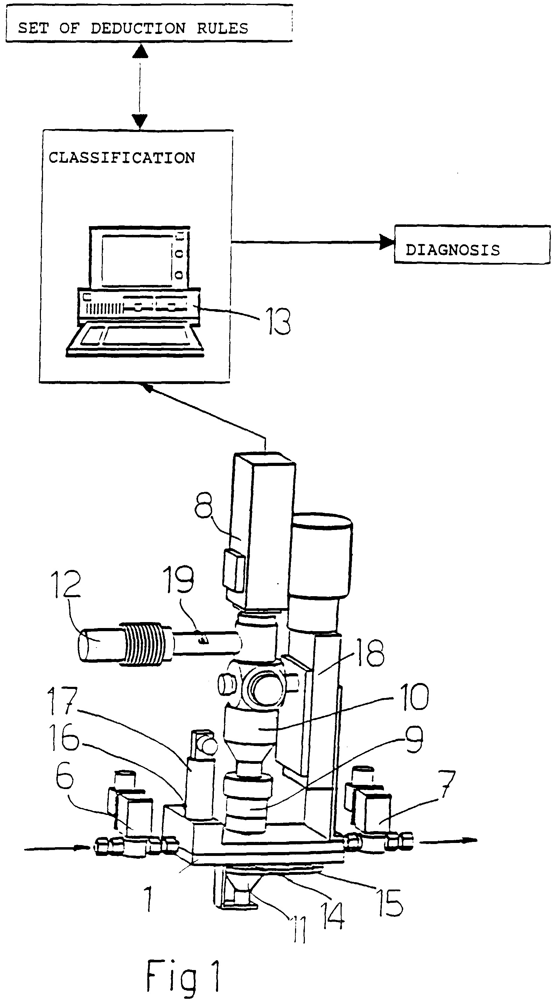

In Fig. 1 is depicted an apparatus by which it is possible to analyse wear particles and other solid impurities present in a flowing fluid and to determine the wear situation of mechanical contacts in contact with the fluid, continuously and in real time according to the on-line principle.

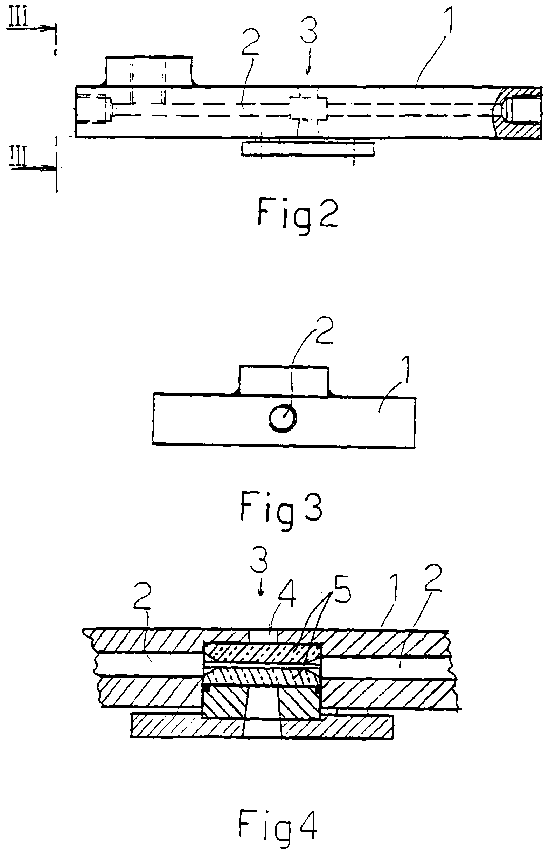

The apparatus comprises a plate-like body 1 as shown in Figs 2-4 and comprising a horizontal measuring passage 2 passing theretrough, by which the fluid flow is conducted to and away from the imaging point 3. The apparatus is inserted e.g. in a hydraulic or lubricating system, in which case hydraulic oil or lubricating oil is conducted into the measuring passage. The body 1 comprises at the imaging point 3 an aperture 4, passing through the body 1 at right angles and transversally to the measuring passage 2. Two transparent imaging windows 5, or glass plates, are connected to the body 1 in register with the aperture 4, parallel with and spaced from each other, so that the fluid can flow through the narrow gap, about 1 mm, between the windows 5. The gap shapes the fluid into a thin film between the windows 5, in order that light might pass through the fluid. The measuring passage 2 has inside threads on either end, in which magnetic valves 6,7 can be inserted. By closing the magnetic valves 6,7, the fluid can be stopped to be stationary in the measuring passage 2. In the fluid feeding direction, before the imaging point 3, is also provided a temperature sensor 16 and a pressure transducer 17 for measuring the temperature and pressure of the fluid.

The apparatus further comprises, connected to the body 1, a photoelectric detector 8 and optical means 9 and 10. The photoelectric detector 8 is, for instance, a CCD camera, for producing images of the fluid and the particles through the imaging windows 5. The optical means include in the present case an objective lens 9 and a distance ring 10. The apparatus further comprises, connected to the body 1, a light source 11 beneath it for illuminating from below the object to be imaged, and a light source 12 above it for illuminating from above the object to be imaged. The light source 12 above, the objective lens 9, the distance ring and the CCD camera 8 are combined in one entity which can be moved with the aid of a transport mechanism 18 perpendicularly relative to the body 1. It is thus understood that the apparatus resembles a microscope fitted with a camera. The apparatus further comprises a number of filters 14, 15 and 19 for polarizing the light from the light source and/or filtering it to different colours or combinations thereof. In the examplary apparatus, the filters 14 and 15 are disposed between the light source 11 on the underside and the body 1. The top-side light source 12 is supported by a tubular component in a horizontal plane, and the filter 19 can be mounted on this component after the top-side light source 12.

The apparatus further comprises a data processing device 13, e.g. a microcomputer. It is furnished with the requisite software means.

The data processing device 13 is further furnished with a set of deduction rules, provided e.g. in the form of an expert system.

An embodiment of the procedure is implemented in that the fluid is conducted from the system into the measuring passage, to the imaging point. The magnetic valves are closed, whereby the fluid stops in the measuring passage and the fluid with particles resides as a thin film between the windows. Immediately after stopping the fluid flow, before the particles have settled on the lower window, the CCD camera is operated to make an image of the central part of the fluid brought into the form of a thin film between the windows, in which image the metallic and non-metallic particles have random orientations, using illumination from below, for particle counting. Later, after the particles have settled on the lower window, an image is made of the fluid with particles on window surface level for wear situation analysis. Several such imaging processes are carried out, using different magnifications, continuous illumination and/or photoflash-type illumination, employing illumination from above or from below or both simultaneously. As may be required, white light, polarized white light and/or combinations of coloured light achieved with filters, such as red light from above and green light from below, are used. Images are taken in statistically significant number in order to assemble a material which is adequate for achieving a cleanliness classification determination comparable with international standards.

Analysis of the images is performed automatically with the data processing device. The analog image from the CCD camera is digitized to become a digital image. The image in digital form is segmented into a monochromatic image and a coloured image, which are further processed by means of digital image processing. From the images, index values which are central in view of cleanliness level and of wear situation are determined, these values describing the size, size distribution, shape, surface structure, light transmittance and colour of the particles present in the fluid. However, prior to determining sizes, shapes and surface structures digital image processing methods are employed to eliminate from the image such particles which are outside the depth of focus range of the image-forming optics.

Subsequently, the data obtained from the images with the aid of the set of deduction rules is classified on the basis of the index values that were found. When from the images the feature combinations of particles present in the fluid have been determined, and when it is known from before that to a given wear mechanism correspond given feature combinations of the particle, one can conclude that the feature combination determined from the particle is consistent with a certain wear mechanism. It is possible in this way to determine the wear situation of sliding and/or rolling mechanical contacts in contact with the fluid.

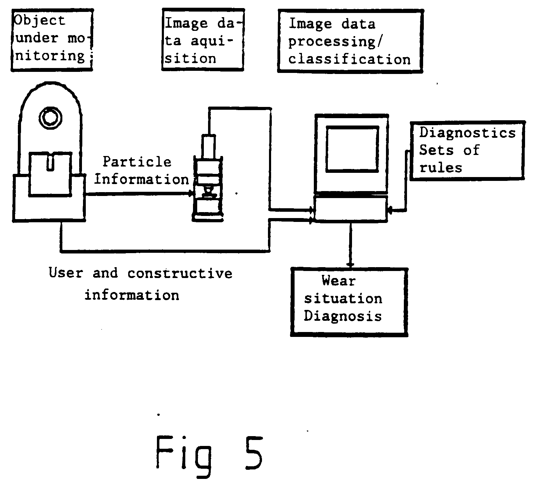

Now follows a closer description of running-time particle analysis, based on machine vision, according to the invention. The particle analysis can be coarsely divided into three steps: image acquisition, image processing and classification and diagnostics. In the deduction performed by the expert system the feature information from the particles is coupled with user and construction information and the user is given an estimate of the purity and wear situation. The structure of the procedure is illustrated by Fig. 5.

Oil used in a hydraulic or lubricating system is made to flow through a perfusion cuvette (e.g. that shown in Figs 1-4). The oil is observed with the aid of a CCD camera attached to a microscope. The flow is stopped before imaging and the wear particles are allowed to settle on the bottom of the imaging chamber, upon a glass plate.

Two images are made of each sample: a photograph rich in contrast from below in opposite light for particle shape analysis, and a photograph from above in normal light, which brings out the surface structure. The image produced by the camera is digitized from the video signal into memory on the image processing board, for analysis.

The particles have been divided into four classes according to the wear mechanism which they indicate:
1. Cutting wear
2. Fatigue wear
3. Adhesive wear
4. Other abrasive or adhesive and abrasive wear.

Classification is based on features describing the shape of the body, computed from its outline. For classification algorithm one may select a so-called fuzzy classifier of k nearest neighbours, which is programmed in a microcomputer. Use of a fuzzy classifier is justified because it is frequently difficult even for an expert to determine with assurance which wear mechanism the particle under examination represents. However, one or several wear mechanisms can always be rejected as being impossible.

The classifier is taught by showing it images of particles belonging to different classes, together with the classification information supplied by the expert. In the teaching stage the memberships in each class of the particle being taught are given in the form of a vector. For instance, a fatigue wear particle belonging to Class 2 (fatigue wear) is taught by means of the vector [0 1 0 0]. If the expert was uncertain as to the exact classification of the particle, it is possible to teach the classifier with uncertain information: for instance, a particle representing fatigue wear in the first place but possibly also abrasive wear can be taught with the vector
[0 0.7 0 0.3].

The classifier yields as result the memberships in each class of the particle which is being classified. If, for instance, the result is the vector [1.0 0 0 0], the features of the object being classified are fully consistent with the features of cutting wear particles and the result of classification can be considered reliable. On the other hand, if the memberships in several classes are different from zero and nearly equal, the result of classification is uncertain (e.g. [0.2 0.3 0,3 0.2]).

On the basis of the results, cutting wear particles (Class 1) and particles representing adhesive wear (Class 3) can be rather well identified on the basis of their shape. Particles belonging to classes 2 (fatigue wear) and 4 (other abrasive or adhesive and abrasive wear) frequently resemble each other in shape to the extent that examination of the particle's surface structure is necessary in order to guarantee a reliable result of classification.

The surface structure of the wear particle is linked with the wear mechanism, and it is therefore justified to associate with the wear diagnostic system of lubricating and hydraulic systems such features detached from the surface structure which classify surface defects in accordance with the wear process.

Since image acquisition is based on use of a CCD camera, one has to look for the surface structure in the internal grey level information of the wear particles, which algorithmically implies application of so-called 2 1/2 D methods, when an attempt is made to estimate the nature of the damage caused by the wear event. As an example may be mentioned, for instance, a ridge or dale (a scratch).

The basis of the first step in the analysis is binarizing and segmentation of the image illuminated from below, these consisting methodologically of automatic thresholding and segmenting of the image. In this connection the oblongness of small particles is also estimated, which cannot be accomplished with any other index values describing shape. Among other features in the software may be mentioned a procedure for eliminating optically non-focussed objects. Employing the particle outlines determined on the basis of segmenting, the particles are detached from the image illuminated from above so that the surface structure might be estimated at the proper point. Feature of surface structure have not heretofore been evaluated in any statistically significant testing.

The feature vector computed by the procedure developed for 2 1/2 D surface examination indicates, in proportional contributions, the characteristic features discernible on the surface of the object. In addition, the average evenness/unevenness of the surface is estimated. The former feature correlates strongly with the strength of unevenness. A modification of the features is based on using the estimated surface normals occurring within the particle in order to create an " unevenness map".

Glossy reflections from a wear particle have also been considered to indicate unevenness of surface structure. On the strength of this an internal segmenting procedure has been developed in which the reflecting sites are separated from the background. A more detailed description of the procedure is forgone here because the operation consists of a great number of steps. With the aid of the procedure the oblongness of the reflecting points, their average orientation and the deviation of the orientation are computed and they are classified as oblong and round entities. Furthermore, the internal central moments of the particles are established, which furnish indications of the surface structures. This portion can be expanded in that the the location data of the image elements is fixed in the particle under examination, whereby the resolution of the procedure is improved.

Since in certain situations the colour of the wear particle directly indicates the object of wear, the colour of the particle supplies unambiguous information to the diagnostics block. Colour analysis is based on computing the differences in colour between segmented particles in a certain colour space, the original RGB (red, green and blue) signal is by a multi-step transformation converted into a colour space presentation appropriate to this purpose. The procedure includes a certain teaching step in which the probable location in the three-dimensional colour space of copper, aluminium and iron metals is estimated. The location in the colour space of the plot condensations produced by the particles is determined by the colour of the particle.

It has been found in tests carried out using the procedure just described that copper metals can be distinguised from iron and aluminium metals. The results from the tests were manually analysed by comparing the locations in the above-mentioned colour space of the plot condensations of particles representing the three metal types.

Advanced image processing methods present useful tools in developing automatic particle analysis. An absolute advantage is versatility and high degree of information. In addition to conventional particle concentration or size distribution, the analysis can be extended to cover also outline or surface structure features, or material features such as transparency and colour, giving closer indication of the wear mechanisms. When applied in run time, the procedure yields information which is more covering in time, and the conventional sources of error of bottle sampling are also eliminated.

On the basis of the invention an expert system for wear particle analysis has been elaborated, which is more closely described in the following. The expert system has easy-to-use user interfaces. It can be used to facilitate determination of a machine's condition. The particles carried along by a fluid yield information on cleanliness and wear situation. The system which has been developed can perform a manual test based on ferrography and bichromatic microscopy, auto-test analysis on an existing data file, image data test based on distinguishing on-line particle features by a visual system, and a lubricant test. The results gained by the expert system are in good agreement with the results obtained from human experts. The system also affords possibilities for on-line queries and help functions.

The system is a ferrography-based system compiled with Microsoft Visual Basic in Windows environment. The system comprises the following parts and functions: easy-to-use user interfaces, a knowledge base containing more than 400 rules of wear particle analysis, a data base containing data tables for recording general test information, a particle information table, results of analysis, and results of lubricant tests. The main steps in the analysis are:
(1) manual test for off-line ferrographic testing with a bichromatic microscope,
(2) auto-test for existing particle analysis,
(3) image test for analysis of on-line particle image processing,
(4) lubricant test for lubricant analysis.

The system furthermore features on-line query procedures for data base processing functions. Some online auxiliary functions have been included in the system. An important part of the system is trend analysis, providing a graphic presentation of the changes in wear situation in a given machine during a given period of time, the period being selectable by the user. The system also comprises procedures printing test information and test reports.

The system has 14 interfaces for performing all predetermined operations, each such port having an independent functional role and containing functions. All the user has to do is to input at the port the requisite information and to press requisite keys.

The particle input parameters include the particle characteristics which may be utilized in diagnosis of wear situation. The following features are collected: ferrometallic or non-ferrometallic, colours, fundamental shapes, surface structure, size, and number. After this information has been input, the system can directly analyse these parameters, using the knowledge base, and give the respective results. When these parameters and the lubricant information have been input, the system performs the analysis. The user may check the remarks in order to be advised of the lubricant's condition, which is determined on the basis of selected, recorded data. The first recorded data in the lubricant data table is always used to record the data of new oils. Type of filtering and pore size are also given to complement the lubricant analysis.

Through the trend analysis interface are input the customer's name, name of the machine, starting time and termination time, to define certain test records for trend analysis. A trend graph is given for the above-mentioned four different wear types.

Through the image analysis interfaces the system is supplied with the name of the image file and the number of time points. Two categories "Images" or "Particles" can be selected. The graphs which are produced represent the changes of image or particle parameters within the selected period of time. Each plot in the graphs represents the average value of each image parameter during the period selected.

In addition to the main interfaces just described, the system comprises additional ports for accomplishing on-line query functions or printing functions.

The nucleus of the system is a knowledge base, which is used in replacement of human experts to derive various results from the different input parameters. It comprises more than 400 rules of wear particle analysis. The rules are divided into four categories: identification of the wear particles' material from the characteristics and colours of the particles, analysis of the wear particles' shape and surface structure, analysis of the wear particles' size and number, and finally analysis of the wear situation. These rules cover the main aspects of ferrography and they are formulated using the "if...then" syntax, whereby they are easy to understand and to modify. It is also easy to add more rules to the knowledge base.

The data base of the expert system is used to store and to process original or deduced data of the system. It comprises four tables, each table having its own data structure. The first table is used to record general test information, such as name of the test, customers' name, test date, etc. The second table is used to record particle information and to deliver it into the knowledge base. The third table is used to record the results of analysis which have been deduced in the knowledge base. The fourth table is used to record and to analyse lubricant. The procedures of the system employ these data structures to acquire, store, print, examine and compute data, and also to communicate with the knowledge base. A procedure has been planed for accomplishing analysis of oil samples: manual test, automatic test, image test, and lubricant test.

The system also offers tools for managing the data base so that the user can directly view and examine, add, delete, transform and print such data as he requires.

It is possible on the basis of the profound understanding of wear to give an accurate indication of the condition of a machine's parts and to predict the service life. At present, the most efficient way to determine the condition of a machine appears to be the use, in combination, of several lubricant analysis methods, such as SOAP, particle count, image analysis, etc. The information thus obtained is fed into an intelligent, human-like diagnostic system, which produces a report of the system's condition and, possibly, also suggestions regarding remedial actions.

The invention is not exclusively confined to concern the embodiment examples presented in the foregoing: numerous modifications are feasible within the scope of the inventive idea defined by the claims.

## Claims

1. A procedure for analysing wear particles and other solid impurities present in a flowing fluid and for continuously determining the wear situation of mechanical contacts in contact with the flowing fluid, characterized in that
- the fluid is conducted to a point of examination,
- a still image is made of the fluid,
- the image in analog form is digitized,
- methods of digital image processing are employed to determine from the image, automatically, the index values central in view of cleanliness level and/or wear situation, which describe the size, size distribution, shape, surface structure, light transmittance and/or colour of the particles in the fluid, and
- the information thus obtained is classified with the aid of the index values found and of a predetermined set of deduction rules, such as an expert system, and the wear situation of sliding and/or rolling mechanical contacts in contact with the fluid is determined.

2. Procedure according to claim 1, characterized in that the still image is produced by physically stopping the fluid flow at the point of examination and/or by illuminating the fluid flow with a flash light source.

3. Procedure according to claim 1 or 2, characterized in that the still image is produced by using an exceedingly short exposure, such as an exposure on the order of 1/100,000 seconds.

4. Procedure according to any one of claims 1-3, characterized in that the fluid is at the point of examination made to become a thin film in order to enable light transmittance.

5. Procedure according to any one of claims 1-4, characterized in that the image in digital form is segmented into a monochromatic image and a coloured image, which are further processed by methods of digital image processing.

6. Procedure according to any one of claims 1-5, characterized in that immediately upon stopping the fluid flow, prior to settling of the particles on the surface of the lower window, an image is made of the central part of the fluid formed into a thin film, where the particles have random orientation, for particle counting.

7. Procedure according to claim 6, characterized in that the particles present in the fluid, such as metallic and/or non-metallic particles, are imaged employing illumination from below.

8. Procedure according to any one of claims 1-7, characterized in that after the particles have settled on the lower window, the fluid with particles is imaged on window surface level for wear situation analysis.

9. Procedure according to any one of claims 1-8, characterized in that a plurality of images is made, using various magnifications.

10. Procedure according to any one of claims 1-9, characterized in that in the imaging continuous illumination and/or illumination of photoflash type is employed.

11. Procedure according to any one of claims 1-10, characterized in that in the imaging illumination from above and/or from below is employed.

12. Procedure according to any one of claims 1-11, characterized in that in the imaging white light, polarized white light and/or combinations of coloured light accomplished by means of filters, such as red light from above and green light from below, are employed.

13. Procedure according to any one of claims 1-12, characterized in that prior to determination of sizes, shapes and surface structures from the image are by digital image processing methods eliminated any particles which are outside the depth of focus range of the imaging optics.

14. Procedure according to any one of claims 1-13, characterized in that images are produced in a statistically significant number for collecting a material which is adequate for accomplishing cleanliness classification determination comparable with international standards.

15. Procedure according to any one of claims 1-14, characterized in that in the set of deduction rules a so-called fuzzy classifier is used.

16. Procedure according to any one of claims 1-15, characterized in that as an intermediate result prior to final wear situation diagnosis are reported the results of classification from the fuzzy classifier and the development as a function of time of the interdistribution of the wear mechanisms.

17. Procedure according to any one of claims 1-16, characterized in that as an intermediate result prior to final wear situation diagnosis is reported the development as a function of time of individual particle features computed by the image processing software.

18. Apparatus for analysing wear particles and other solid impurities present in a flowing fluid and for continuous determination of the wear situation of mechanical contacts in contact with the flowing fluid, characterized in that the apparatus comprises
- a body (1), comprising a through-going measuring passage (2) for conducting the fluid flow to and away from an imaging point (3), an aperture (4) extending at the imaging point transversally to the measuring passage through said body, and two imaging windows (5), supported by the body in register with said aperture, the gap between said windows being in flow communication with said measuring passage;
- a photoelectric detector (8) and optical means (9,10), supported by said body, for imaging the fluid and the particles present therein through said imaging windows;
- a light source (11,12) for illuminating the object which is being imaged; and
- a data processing device (13) comprising
- - software means for digitizing the image in analog form to become digital and for automatically determining by methods of digital image processing the index values central in view of cleanliness level and/or wear situation of the system, describing the size, size distribution, shape, surface structure, light transmittance and/or colour of the particles present in the fluid, and
- - a set of deduction rules, such as an expert system, for classifying the information thus obtained with the aid of the index values found and for determining the wear situation of sliding and/or rolling mechanical contacts in contact with the fluid.

19. Apparatus according to claim 18, characterized in that the apparatus comprises valves (6,7) for stopping the fluid in the measuring passage to the purpose of making a still image of the fluid.

20. Apparatus according to claim 18 or 19, characterized in that the light source (11,12) is a flash light source, such as a stroboscopic lamp, for making a still image of the fluid.

21. Apparatus according to any one of claims 18-20, characterized in that the imaging windows (5) are disposed horizontally, spaced at a substantially small distance, for making the fluid asume the form of a thin film at the imaging point.

22. Apparatus according to any one of claims 18-21, characterized in that the software means have been arranged to segment the image in digital form into a monochromatic and a coloured image.

23. Apparatus according to any one of claims 18-22, characterized in that the apparatus comprises an underside light source (11) for accomplishing illumination from below.

24. Apparatus according to any one of claims 18-23, characterized in that the apparatus comprises a topside light source (12) for accomplishing illumination from above.

25. Apparatus according to any one of claims 18-24, characterized in that the apparatus comprises filters (14,15,19) for polarizing the light from the light source and/or filtering it into different colours or combinations thereof.

26. Apparatus according to any one of claims 18-25, characterized in that the photoelectric detector (8) is a row-shaped, location-sensitive detector, such as a line camera, or a matrix-shaped location-sensitive detector, such as a CCD camera.

27. Apparatus according to any one of claims 18-26, characterized in that the apparatus comprises a light conductor composed of optic fibres for conducting light from the light source (11,12) to the point of examination (3).

## Patentansprüche

1. Verfahren zur Analyse von Verschleißpartikeln und anderen festen Verunreinigungen, die in einem fließenden Fluid vorhanden sind, und zur kontinuierlichen Bestimmung des Abnutzungsgrades von mechanischen Kontakten, die in Kontakt mit dem fließenden Fluid sind,
**dadurch gekennzeichnet**, dass
- das Fluid zu einem Untersuchungspunkt geleitet wird,
- ein Standbild von dem Fluid gemacht wird,
- das Bild in analoger Form digitalisiert wird,
- Verfahren für die Verarbeitung von digitalen Bildern verwendet werden, um automatisch von dem Bild die Indexwerte, die wesentlich in Hinsicht auf das Reinheitsniveau und/oder den Abnutzungsgrad sind, zu bestimmen, welche die Größe, die Größenverteilung, die Form, die Oberflächenstruktur, die Lichtdurchlässigkeit und/oder die Farbe der Partikel in dem Fluid beschreiben, und
- die so erhaltene Informationen mit der Hilfe der gefundenen Sollwerte und einem vorbestimmten Satz von Deductionsregeln, z.B. einem Expertensystem, klassifiziert werden, das den Abnutzungsgrad von gleitenden und/oder rollenden mechanischen Kontakten in Kontakt mit dem Fluid bestimmt wird.

2. Verfahren nach Anspruch 1,
**dadurch gekennzeichnet**, dass
Standbild durch ein physikalisches Stoppen des Fluidflusses an dem Untersuchungspunkt und/oder durch Beleuchten des Fluidstroms mit einer Blitzlichtquelle erzeugt wird.

3. Verfahren nach Anspruch 1 oder 2,
**dadurch gekennzeichnet**, dass
das Standbild durch die Verwendung einer außerordentlich kurzen Belichtung, z.B. einer Belichtung einer Größenordnung von 1/100.000 Sekunden erzeugt wird.

4. Verfahren nach einem der Ansprüche 1 bis 3,
**dadurch gekennzeichnet**, dass
das Fluid an dem Untersuchungspunkt zu einem dünnen Film gemacht wird, um eine Lichttransmission zu ermöglichen.

5. Verfahren nach einem der Ansprüche 1 bis 4,
**dadurch gekennzeichnet,** dass
das Bild in digitaler Form in ein monochromatisches Bild und ein farbiges Bild unterteilt wird, weiche weiter durch Verfahren der digitalen Bildverarbeitung behandelt werden.

6. Verfahren nach einem der Ansprüche 1 bis 5,
**dadurch gekennzeichnet,** dass
unmittelbar nach dem Anhalten des Fluidflusses und vor dem Absetzen von Partikeln auf der Oberfläche des unteren Fensters, ein Bild des zentralen Bereiches des Fluides gemacht wird, welches in einem dünnen Film geformt ist, in dem die Partikel eine zufällige Orientierung haben, um die Partikel zu zählen.

7. Verfahren nach Anspruch 6,
**dadurch gekennzeichnet,** dass
die Partikel, die in dem Fluid vorhanden sind, z.B. metallische und/oder nicht-metallische Partikel, durch eine Beleuchtung von unten abgebildet werden.

8. Verfahren nach einem der Ansprüche 1 bis 7,
**dadurch gekennzeichnet,** dass
nachdem sich die Partikel auf dem unteren Fenster abgelagert haben, das Fluid mit Partikeln auf dem Fensteroberflächenniveau für die Analyse des Abnutzungsgrades abgebildet wird.

9. Verfahren nach einem der Ansprüche 1 bis 8,
**dadurch gekennzeichnet,** dass
mehrere Bilder unter Verwendung von unterschiedlichen Vergrößerungsgraden gemacht werden.

10. Verfahren nach einem der Ansprüche 1 bis 9,
**dadurch gekennzeichnet,** dass
bei der Bilderzeugung eine kontinuierliche Beleuchtung und/oder eine Beleuchtung mit einem Fotoblitz verwendet wird.

11. Verfahren nach einem der Ansprüche 1 bis 10.
**dadurch gekennzeichnet,** dass
bei der Bilderzeugung eine Beleuchtung von oben und/oder von unten verwendet wird.

12. Verfahren nach einem der Ansprüche 1 bis 11,
**dadurch gekennzeichnet,** dass
bei der Bilderzeugung weißes Licht, polarisiertes weißes Licht und/oder Kombinationen von gefärbtem Licht unter der Verwendung von Filtern benutzt wird, z.B. rotes Licht von oben und grünes Licht von unten.

13. Verfahren nach einem der Ansprüche 1 bis 12,
**dadurch gekennzeichnet,** dass
vor der Bestimmung der Größen, der Formen und der Oberflächenstrukturen aufgrund des Bildes alle Partikel durch Verfahren der digitalen Bildverarbeitung eliminiert werden, die außerhalb der Tiefe des Fokusbereiches der Abbildungsoptiken sind.

14. Verfahren nach einem der Ansprüche 1 bis 13,
**dadurch gekennzeichnet,** dass
Bilder in einer statistisch signifikanten Anzahl erzeugt werden, um ein Material zu sammeln, welches geeignet ist, eine Bestimmung einer Reinheitsklassifikation vergleichbar mit internationalen Standards durchzuführen.

15. Verfahren nach einem der Ansprüche 1 bis 14,
**dadurch gekennzeichnet,** dass
in dem Satz von Deduktionsregeln ein sogen. Fuzzy-Klassifizierer verwendet wird.

16. Verfahren nach einem der Ansprüche 1 bis 15,
**dadurch gekennzeichnet,** dass
als ein Zwischenresultat vor der endgültigen Diagnose des Abnutzungsgrades die Resultate der Klassifikation von dem Fuzzy-Klassifizierer und der Entwicklung als eine Funktion der Zeit von der Interdistribution der Ablagerungsmechanismen, berichtet wird.

17. Verfahren nach einem der Ansprüche 1 bis 16,
**dadurch gekennzeichnet,** dass
als ein Zwischenergebnis vor der endgültigen Diagnose des Abnutzungsgrades die Entwicklung als eine Funktion der Zeit von individuellen Partikeleigenschaften berichtet wird, die durch die Bildverarbeitungssoftware berechnet wird.

18. Vorrichtung zur Analyse von Verschleißpartikeln und anderen festen Verunreinigungen, die in einem fließenden Fluid vorhanden sind, und zur kontinuierlichen Bestimmung des Abnutzungsgrades von mechanischen Kontakten, die in Kontakt mit dem fließenden Fluid sind,
**dadurch gekennzeichnet,** dass
die Vorrichtung folgendes umfasst:
einen Körper (1), der eine durchgehende Messpassage zur Leitung des Fluidflusses zu einem imaginären Punkt (3) und von diesem weg, eine Apertur (4), die sich an dem imaginären Punkt transversal zu der Messpassage durch den Körper erstreckt, und zwei Abbildungsfenster (5), die durch den Körper unterstützt und in der Apertur eingefasst sind, wobei der Spalt zwischen den Fenstern in einer Flusskommunikation mit der Messpassage ist; einen fotoelektrischen Detektor (8) und optische Mittel (9, 10), die durch den Körper unterstützt sind, zur Abbildung des Fluides und der darin enthaltenen Partikel durch die Abbildungsfenster;
eine Lichtquelle (11, 12) zur Beleuchtung des abzubildenden Objektes; und
eine Datenverarbeitungsvorrichtung (13), die umfasst
Softwaremittel für die Digitalisierung des Bildes in analoger Form, damit dieses digital wird, und zur automatischen Bestimmung der Indexwerte durch Verfahren der digitalen Bildverarbeitung, die wesentlich in Hinsicht auf das Reinheitsniveau und/oder den Abnutzungsgrad des Systemes sind, welche die Größe, die Größenverteilung, die Form, die Oberflächenstruktur, die Lichtdurchlässigkeit und/oder die Farbe der Partikel beschreiben, die in dem Fluid vorhanden sind, und
einen Satz von Deduktionsregeln, z.B. ein Expertensystem zur Klassifizierung der so erhaltenen Informationen mit der Hilfe der gefundenen Indexwerte und zur Bestimmung des Abnutzungsgrades von gleitenden und/oder rollenden mechanischen Kontakten, die in Kontakt mit dem Fluid sind.

19. Vorrichtung nach Anspruch 18,
**dadurch gekennzeichnet,** dass
die Vorrichtung Ventile (6, 7) zum Anhalten des Fluides in der Messpassage umfasst, um ein Standbild des Fluides zu machen.

20. Vorrichtung nach Anspruch 18 oder 19,
**dadurch gekennzeichnet,** dass
die Lichtquelle (11, 12) eine Blitzlichtquelle, z.B. eine Stroboskoplampe ist, um ein Standbild des Fluides zu machen.

21. Vorrichtung nach einem der Ansprüche 18 bis 20,
**dadurch gekennzeichnet,** dass
die Abbildungsfenster (5) horizontal und mit einer im Wesentlichen kleinen Distanz beabstandet voneinander angeordnet sind, um zu bewirken, dass das Fluid an dem imaginären Punkt die Form eines dünnen Filmes annimmt.

22. Vorrichtung nach einem der Ansprüche 18 bis 21,
**dadurch gekennzeichnet,** dass
das Softwaremittel angeordnet ist, um das Bild in digitaler Form in ein monochromatisches und ein farbiges Bild zu unterteilen.

23. Vorrichtung nach einem der Ansprüche 18 bis 22,
**dadurch gekennzeichnet,** dass
die Vorrichtung eine Unterseitenlichtquelle (11) zur Bereitstellung einer Beleuchtung von unten umfasst.

24. Vorrichtung nach einem der Ansprüche 18 bis 22,
**dadurch gekennzeichnet,** dass
die Vorrichtung eine Oberseitenlichtquelle (12) für die Bereitstellung einer Beleuchtung von oben umfasst.

25. Vorrichtung nach einem der Ansprüche 18 bis 24,
**dadurch gekennzeichnet,** dass
die Vorrichtung Filter (14, 15, 19) umfasst für die Polarisierung des Lichtes von der Lichtquelle und/oder um dieses Licht in verschiedene Farben oder Kombinationen derselben zu filtern.

26. Vorrichtung nach einem der Ansprüche 18 bis 25,
**dadurch gekennzeichnet,** dass
der fotoelektrische Detektor (8) ein zeilenförmiger ortssensitiver Detektor, z.B. eine Zeilenkamera oder ein matrixförmiger ortssensitiver Detektor, z.B. eine CCD-Kamera ist.

27. Vorrichtung nach einem der Ansprüche 18 bis 26,
**dadurch gekennzeichnet,** dass
die Vorrichtung einen Lichtleiter umfasst, der optische Lichtwellenleiter zur Leitung des Lichtes von der Lichtquelle (11, 12) zu dem Untersuchungspunkt (3) beinhaltet.

## Revendications

1. Méthode permettant d'analyser des particules résultant d'usure et autres impuretés solides présentes dans un fluide circulant et de déterminer en continu, la situation d'usure de contacts mécaniques en contact avec le fluide circulant, caractérisée en ce que
- le fluide est conduit jusqu'à un point d'examen,
- une image fixe est prise du fluide,
- l'image analogique est numérisée,
- des procédés de traitements d'image numérique sont employés pour déterminer automatiquement, à partir de l'image, les valeurs d'indices centrales au plan du niveau de propreté et/ou de la situation d'usure, qui décrivent la taille, la composition granulométrique, la forme, la structure superficielle, la transmission de la lumière et/ou la couleur des particules présentes dans le fluide, et
- les informations ainsi obtenues sont classées à l'aide des valeurs d'indices trouvées et d'un jeu prédéterminé de règles de déduction, tel qu'un système expert, et la situation d'usure des contacts mécaniques roulant et/ou coulissant en contact avec le fluide est déterminée.

2. Méthode selon la revendication 1, caractérisée en ce que l'image fixe est produite par un arrêt physique de l'écoulement du fluide au point d'examen et/ou en éclairant l'écoulement du fluide avec une source d'éclairs.

3. Méthode selon la revendication 1 ou 2, caractérisée en ce que l'image fixe est produite en utilisant une exposition extrêmement courte, telle qu'une exposition de l'ordre de 1/100.000 seconde.

4. Méthode selon l'une quelconque des revendications 1 à 3, caractérisée en ce que le fluide est, au point d'examen, transformé en une couche mince afin de permettre la transmission de le lumière.

5. Méthode selon l'une quelconque des revendications 1 à 4, caractérisée en ce que l'image sous forme numérique est segmentée en une image monochromatique et une image colorée qui sont en outre traitées grâce aux procédés de traitement d'image numérique.

6. Méthode selon l'une quelconque des revendications 1 à 5, caractérisée en ce que, dés l'arrêt de l'écoulement du fluide, avant de faire déposer les particules sur la surface de la fenêtre inférieure, une image est faite de la partie centrale du fluide formé an une couche mince, où les particules ont une orientation aléatoire, afin de compter les particules.

7. Méthode selon la revendication 6, caractérisée en ce que les particules présentes dans le fluide, telles que des particules métalliques et/ou non métalliques, sont mises en image an employant un éclairage par au-dessous.

8. Méthode selon l'une quelconque des revendications 1 à 7, caractérisée en ce que, lorsque les particules se sont déposées sur la fenêtre inférieure, le fluide contenant les particules est mis en image sur la surface de le fenêtre aux fins d'analyse de la situation d'usure.

9. Méthode selon l'une quelconque des revendications 1 à 8, caractérisée en ce qu'une pluralité d'images est faite, en utilisant différents agrandissements.

10. Méthode selon l'une quelconque des revendications 1 à 9, caractérisée an ce que lors de la prise d'Image, un éclairage continu et/ou un éclairage du type photoéclair est utilisé.

11. Méthode selon l'une quelconque des revendications 1 à 10, caractérisée an ce que lors de la prise d'image, un éclairage de dessus et/ou de dessous est utilisé.

12. Méthode selon l'une quelconque des revendications 1 à 11, caractérisée en ce que lors de la prise d'image, de la lumière blanche, polarisée à la lumière blanche et/ou des combinaisons de lumière colorée réalisées grâce à des filtres, comme de la lumière rouge par dessus et de la lumière verte par dessous, sont utilisées.

13. Méthode selon l'une quelconque des revendications 1 à 12, caractérisée an ce que, avant la détermination de la taille, de la forme et de la structure superficielle de l'image, toutes les particules qui ne sont pas comprises dans la gamme de mise au point de l'optique de prise d'image sont éliminées grâce aux procédés de traitement d'image numérique.

14. Méthode selon l'une quelconque des revendications 1 à 13, caractérisée en ce que les images sont produites en un nombre statiquement significatif pour collecter une matière adéquate pour réaliser une détermination de classification de propreté comparable aux normes internationales.

15. Méthode selon l'une quelconque des revendications 1 à 14, caractérisée en ce que, dans le jeu de règles de déduction, un classificateur dit flou est utilisé.

16. Méthode selon l'une quelconque des revendications 1 à 15, caractérisée on ce que les résultats de la classification obtenus grâce au classificateur flou ainsi que la développement en fonction du temps de l'inter-répartition des mécanismes d'usure sont rapportés on tant que résultat intermédiaire précédant le diagnostic final de situation d'usure.

17. Méthode selon l'une quelconque des revendications 1 à 16, caractérisée en ce que le développement en fonction du temps des caractéristiques des particules séparées calculées par le logiciel de traitement d'image est rapporté on tant que résultat intermédiaire précédant le diagnostic final de situation d'usure.

18. Appareil permettant d'analyser des particules résultant d'usure et autres impuretés solides présentes dans un fluide circulant, et de déterminer en continu la situation d'usure de contacts mécaniques an contact avec le fluide circulant, caractérisée on ce que l'appareil comprend
- un corps (1), comprenant un passage de mesure (2) traversant permettant de conduire l'écoulement du fluide en direction de, et à partir d'un point de prise d'image (3), une ouverture (4) s'étendant au point de prise d'image perpendiculairement au passage de mesure, à travers ledit corps, et deux fenêtres de prise d'image (5), supportées par le corps de façon à être calées avec ladite ouverture. l'interstice entre les deux dites fenêtres étant an communication fluidique avec ledit passage de mesure ;
- un détecteur photoélectrique (8) et des moyens optiques (9, 10) supportés par ledit corps, pour la prise d'image du fluide et dus particules présentes dans celui-ci à travers lesdites fenêtres de prise d'images ;
- une source lumineuse (11, 12) pour éclairer l'objet dont on prend une image ; et
- un dispositif de traitement de données (13), comprenant :
- - un moyen logiciel pour numériser l'image sous forme analogique afin qu'elle devienne numérique et pour déterminer automatiquement, au moyen de procédés de traitement d'image numérique, les valeurs d'indice centrales au plan du niveau de propreté et/ou de la situation d'usure du système, décrivant la taille, la composition granulométrique, la forme, la structure superficielle, la transmission de la lumière et/ou la couleur des particules présentes dans le fluide, et
- - un jeu de règles de déduction, comme un système expert, pour classer les informations ainsi obtenues à l'aide des valeurs d'indice trouvées et pour déterminer la situation d'usure des contacts mécaniques roulant et/ou coulissant en contact avec le fluide.

19. Appareil selon la revendication 18, caractérisé an ce que l'appareil comprend des soupapes (6, 7) pour arrêter le fluide dans le passage de mesure dans le but de prendre une image fixe du fluide.

20. Appareil selon la revendication 18 ou 19, caractérisé en ce que la source lumineuse (11, 12) est une source lumineuse éclair, tel qu'une lampe stroboscopique, pour prendre une image fixe du fluide.

21. Appareil selon l'une quelconque des revendications 18 à 20, caractérisé an ce que les fenêtres d'image (5) sont disposées horizontalement, espacées selon une distance essentiellement petite, afin de faire prendre au fluide la forme d'une couche mince au point de prise d'image.

22. Appareil selon l'une quelconque des revendications 18 à 21, caractérisé en ce que le moyen logiciel a été agencé pour segmenter l'image sous forme numérique en une image monochromatique et colorée.

23. Appareil selon l'une quelconque des revendications 18 à 22, caractérisé on ce que l'appareil comprend une source lumineuse située au-dessous (11) pour réaliser l'éclairage par dessous.

24. Appareil selon l'une quelconque des revendications 18 à 23, caractérisé en ce que l'appareil comprend une source lumineuse située au-dessus (12) pour réaliser l'éclairage par dessus.

25. Appareil selon l'une quelconque des revendications 18 à 24, caractérisé an ce que l'appareil comprend des filtres (14, 15, 19) pour polariser la lumière provenant de la source lumineuse et/ou pour la filtrer en différentes couleurs ou combinaisons.

26. Appareil selon l'une quelconque des revendications 18 à 25, caractérisé on ce que le détecteur photoélectrique (8) est un détecteur sensible à la position et formé en ligne, tel qu'une caméra en ligne, ou un détecteur sensible à la position an forme de matrice, comme une caméra CCD.

27. Appareil selon l'une quelconque des revendications 18 à 26, caractérisé en ce que l'appareil comprend un conducteur de lumière composé de fibres optiques pour conduire la lumière provenant de la source lumineuse (11, 12) jusqu'au point d'examen (3).
